(19) Europäisches Patentamt

European Patent Office

Office européen des brevets

(11) **EP 1 399 357 B1**

(12) **FASCICULE DE BREVET EUROPEEN**

(45) Date de publication et mention
de la délivrance du brevet:
**09.08.2006 Bulletin 2006/32**

(51) Int Cl.:
***B62K 5/04*** *(2006.01)*

(21) Numéro de dépôt: **02743351.5**

(86) Numéro de dépôt international:
**PCT/FR2002/001940**

(22) Date de dépôt: **06.06.2002**

(87) Numéro de publication internationale:
**WO 2002/098722 (12.12.2002 Gazette 2002/50)**

(54) **VEHICULE ARTICULE**

GELENKFAHRZEUG

ARTICULATED VEHICLE

(84) Etats contractants désignés:
**AT BE CH CY DE DK ES FI FR GB GR IE IT LI LU
MC NL PT SE TR**

(30) Priorité: **06.06.2001 FR 0107405**

(43) Date de publication de la demande:
**24.03.2004 Bulletin 2004/13**

(60) Demande divisionnaire:
**06009662.5 / 1 686 053**

(73) Titulaires:
• **VELIS**
**78180 Montigny le Bretonneux (FR)**
• **Patin, Pierre**
**75005 Paris (FR)**
• **Patin, Pierre-Armand**
**92190 Meudon (FR)**

(72) Inventeurs:
• **PATIN, Pierre**
**F-75005 PARIS (FR)**
• **PATIN, Pierre-Armand**
**F-92190 MEUDON (FR)**

(74) Mandataire: **Le Brusque, Maurice et al
Cabinet Harlé et Phélip
7, rue de Madrid
75008 Paris (FR)**

(56) Documents cités:
**DE-A- 3 611 417        FR-A- 2 639 016
FR-A- 2 688 465        GB-A- 1 561 253
US-A- 4 423 795**

**Description**

L'invention a pour objet un véhicule articulé et, en particulier, un véhicule à trois roues muni d'un dispositif de stabilisation.

On sait qu'il existe d'une façon générale, deux types de véhicules roulant sur le sol, d'une part les véhicules à trois ou quatre roues qui sont naturellement stables à l'arrêt et, d'autre part, les véhicules à deux roues qui ne sont stables qu'au dessus d'une vitesse minimale et que le conducteur peut incliner, dans les courbes, pour maintenir le centre de gravité dans le plan de la verticale apparente, c'est-à-dire la résultante de la pesanteur et de la force centrifuge.

Les véhicules habituels à quatre roues sont plus larges et moins maniables que les véhicules à deux roues qui, en revanche, ne peuvent pas, normalement, être équipés d'une caisse de protection contre les intempéries et les chocs. En effet, le conducteur doit avoir la possibilité de poser son pied sur le sol, au moment de l'arrêt, du côté où le véhicule s'incline par rapport à la verticale et, lors du démarrage, pour redresser son véhicule.

Depuis plusieurs années, on a cherché à résoudre ce problème en proposant un véhicule intermédiaire ayant deux roues écartées pour être stable à l'arrêt mais articulé de façon à se comporter, sur la route, comme un véhicule à deux roues à stabilisation dynamique, en s'inclinant dans les courbes pour compenser les effets de la force centrifuge.

Généralement, un tel véhicule repose sur trois roues et est constitué de deux châssis articulés l'un sur l'autre autour d'un axe longitudinal, respectivement un châssis arrière reposant sur deux roues écartées et un châssis avant reposant sur une roue directrice et portant une caisse de protection à l'intérieur de laquelle est placé au moins un siège pour le conducteur.

En déplacement, l'articulation est libre et permet au conducteur d'incliner le châssis avant, avec la caisse, pour maintenir le plan médian longitudinal de celle-ci dans l'alignement de la verticale apparente, le véhicule se comportant donc comme un motocycle. En revanche, lorsque le véhicule descend en dessous d'une certaine vitesse, l'articulation se bloque et le véhicule est stabilisé par son essieu arrière.

Des véhicules de ce type font l'objet de plusieurs brevets antérieurs du même inventeur, en particulier les documents FR-A-2600612, FR-A-2639016 et FR-A-2688465.

D'une façon générale, l'articulation comprend deux parties montées rotatives l'une sur l'autre et solidaires en rotation, respectivement des deux châssis et le blocage de l'articulation est assuré par un organe pendulaire soumis à l'action conjuguée de la pesanteur et de la force centrifuge et qui commande la solidarisation des deux parties de l'articulation lorsqu'il est dévié d'un côté ou de l'autre du plan médian du châssis inclinable. En particulier, lors de l'arrêt du véhicule, le châssis sur lequel est suspendu l'organe pendulaire s'incline d'un côté dès que la vitesse du véhicule descend au-dessous d'une certaine limite et cette inclinaison du plan médian par rapport à la verticale détermine un écartement du pendule qui commande le blocage de l'articulation et, par conséquent, la stabilisation du véhicule.

Ce moyen de blocage est, cependant, amovible car l'articulation doit pouvoir se débloquer dans l'autre sens pour permettre le redressement du véhicule, avec retour du pendule dans le plan médian du châssis.

En particulier, lorsque le véhicule est à l'arrêt, il est légèrement incliné et doit être redressé au moment du démarrage pour débloquer l'articulation.

De la même façon, le conducteur d'un cycle ou d'un motocycle redresse celui-ci, au moment du démarrage, pour se trouver immédiatement en équilibre et partir en ligne droite et, pour cela, il prend appui, d'un côté sur le sol et de l'autre sur le guidon de direction.

Cette simple action n'est pas possible, dans le cas d'un véhicule articulé muni d'une caisse de protection fermée qui empêche le conducteur de prendre appui sur le sol au moment du démarrage, à moins de prévoir une ouverture à cet effet. Or, si le véhicule n'est pas redressé, il démarre en tournant du côté vers lequel il est incliné à l'arrêt avant que la vitesse soit suffisante pour assurer la stabilisation dynamique.

L'invention a pour objet de résoudre ce problème en permettant le déblocage de l'articulation au moment du démarrage du véhicule même lorsque le conducteur se trouve dans une caisse entièrement fermée.

L'invention s'applique donc, d'une façon générale, à un véhicule articulé déplaçable sur le sol suivant une direction longitudinale, comprenant deux châssis reliés l'un à l'autre par une articulation tournant autour d'un axe longitudinal parallèle à la direction de déplacement et ayant chacun un plan médian passant par l'axe d'articulation, respectivement un premier châssis prenant appui sur le sol par un premier organe roulant et centré sur un premier plan médian perpendiculaire au sol, et un second châssis prenant appui sur le sol par un second organe roulant orientable par rapport à la direction de déplacement et centré sur un second plan médian inclinable par rapport au sol par rotation autour de l'axe d'articulation. Cette articulation peut être bloquée au moyen d'un dispositif comportant deux parties solidaires en rotation, respectivement, du premier et du second châssis, et un moyen de blocage amovible comprenant un organe pendulaire de commande de la solidarisation en rotation desdites deux parties, qui est suspendu au second châssis et monté oscillant, de part et d'autre du second plan médian entre une position médiane de déblocage de l'articulation, pour laquelle le second plan médian est orienté suivant la direction du pendule et une position écartée de blocage de l'articulation, au moins à l'arrêt du véhicule, par inclinaison du second châssis par rapport à la direction du pendule.

Conformément à l'invention, le véhicule comprend un moyen de commande du déblocage de l'articulation , au moins lors du démarrage du véhicule, comprenant une plate-forme auxiliaire solidaire, en rotation, du premier châssis et comportant, au moins, deux repose-pieds placés sensiblement au même niveau par rapport au sol, de part et d'autre de l'axe d'articulation et constituant chacun, du côté vers lequel le second châssis est incliné, un appui pour le redressement dudit second châssis par un conducteur du véhicule, avec retour de l'organe pendulaire dans sa position médiane de déblocage de l'articulation.

Dans un premier mode de réalisation, le dispositif de blocage comprend un ensemble de barres articulées formant un parallélogramme déformable comportant deux traverses écartées sensiblement parallèles au sol, respectivement une première traverse solidaire en rotation du premier châssis et une seconde traverse articulée autour d'un axe longitudinal placé sur le second châssis, dans le plan médian de celui-ci, et deux montants s'étendant de part et d'autre dudit second plan médian, parallèlement à celui-ci. Dans ce cas, l'organe pendulaire de commande de commande comprend une poutre rigide suspendue au premier châssis, s'étendant transversalement entre les deux montants et associée à des moyens de solidarisation en rotation d'au moins l'un des montants avec ladite poutre par déplacement de celle-ci vers l'un ou l'autre côté du second plan médian.

De façon avantageuse, la première traverse de l'ensemble articulé est constituée de deux bras fixés rigidement sur une première partie de l'articulation et s'étendant de part et d'autre de l'axe longitudinal de celle-ci et la seconde traverse est constitué d'un balancier articulé sur une partie centrale du second châssis, autour d'un axe longitudinal placé dans le plan médian de ce dernier, par exemple, une colonne centrale fixée rigidement sur la seconde partie de l'articulation et portant au moins un siège pour le conducteur du véhicule.

De préférence, le parallélogramme déformable est du type décrit dans le brevet précédent N°2688465 du même inventeur, les moyens de solidarisation étant constitués de deux chariots sur lesquels la poutre pendulaire est montée coulissante parallèlement à elle même, et qui se déplacent librement le long de chacun des montants du parallélogramme tant que le centre de gravité de la poutre reste centré dans le plan médian du second châssis, ladite poutre déterminant le blocage d'au moins un chariot sur le montant correspondant avec solidarisation en rotation dudit montant avec la poutre lorsque cette dernière est déviée d'un côté ou de l'autre du second plan médian.

Avantageusement, la plate-forme auxiliaire peut être constituée simplement de deux repose-pieds fixés respectivement sur les deux montants du parallélogramme déformable.

Dans un autre mode de réalisation, le dispositif de blocage de l'articulation comporte une première partie solidaire en rotation du premier châssis et formant une virole entourant l'axe d'articulation des deux châssis et une seconde partie solidaire en rotation du second châssis et formant un bras s'étendant transversalement à l'axe d'articulation, à l'intérieur de la virole, et un organe pendulaire de commande comprenant une béquille suspendue à une extrémité dudit bras, autour d'un axe parallèle à l'axe d'articulation et placé dans le plan médian du second châssis, ladite béquille oscillant à l'intérieur de la virole et prenant appui sur celle-ci par une extrémité inférieure, en cas d'inclinaison du plan médian par rapport à la verticale apparente, avec blocage de l'inclinaison par arc-boutement de la béquille sur la virole.

Dans les deux cas, l'organe pendulaire peut commander le blocage de l'articulation lorsqu'il s'écarte du plan médian du second châssis et ceci peut se produire en cours de déplacement si le conducteur n'incline pas correctement la caisse du véhicule en maintenant le plan médian du second châssis en coïncidence avec la direction du pendule, c'est-à-dire la résultante de la pesanteur et de la force centrifuge.

Un tel système, comme on l'a décrit dans les brevets précédents du même inventeur, permet d'éviter des erreurs, en particulier pour un conducteur novice qui, étant enfermé dans la caisse du véhicule, risque de ne pas apprécier correctement l'inclinaison à donner à celle-ci. Ceci peut être préférable également lorsque le véhicule circule à une vitesse faible, par exemple, dans une circulation encombrée.

En revanche, lorsque le véhicule circule à une vitesse assez élevée pour assurer, naturellement, la stabilisation dynamique, il peut être préférable de supprimer tout risque de blocage anormal dû, par exemple, à un faux mouvement du conducteur ou à une irrégularité importante de la route.

Dans un mode de réalisation préférentiel, le véhicule comporte donc un dispositif amovible de verrouillage, en route, de l'organe pendulaire dans sa position médiane de déblocage de l'articulation et un moyen de commande du dispositif de verrouillage pour une vitesse du véhicule supérieure à un seuil donné.

Ainsi, à partir d'un certain seuil de vitesse qui peut être choisi par le constructeur ou éventuellement par le conducteur, le système de blocage de l'inclinaison ne joue plus, la caisse étant parfaitement libre et la conduite du véhicule rigoureusement identique à celle d'un véhicule normal à deux roues.

Un tel dispositif de verrouillage peut comprendre un verrou déplaçable entre une position écartée de libération de l'organe pendulaire pour le blocage de celui-ci dans sa position médiane, un moyen de détection de la vitesse du véhicule et un moyen de commande du déplacement du verrou de sa position écartée à sa position engagée, actionné par le moyen de détection lorsque la vitesse du véhicule dépasse un seuil donné.

De façon particulièrement avantageuse, le moyen de commande du déplacement du verrou de sa position écartée à sa position engagée est commandé électriquement à partir d'impulsions émises par un détecteur de vitesse, à un intervalle de temps $t_1$ inversement proportionnel à la vitesse de déplacement du véhicule, par l'intermédiaire d'un relais temporisé comprenant un circuit de réception des impulsions, un circuit de charge pour l'alimentation du moyen de commande pendant un temps $t_2$ à partir de l'impulsion, un premier circuit de fermeture du circuit de charge avec un temps donné t de retard après chaque impulsion et un second circuit de fermeture du circuit de charge pendant un temps donné $t_0$ à partir de l'impulsion, le circuit de charge étant ainsi fermé, de façon continue lorsque le temps $t_1$ entre deux impulsions est inférieur au temps de retard t du premier circuit de fermeture et ouvert, de façon continue, dans le cas contraire.

Mais l'invention sera mieux comprise par la description suivante de certains modes de réalisation particuliers, donnés à titre d'exemple, à titre non limitatifs et représentés sur les dessins annexés.

La Figure 1 est une vue partielle, en perspective, d'un premier mode de réalisation du véhicule articulé selon l'invention.

La Figure 2 montre, en perspective, un second mode de réalisation du véhicule articulé.

La Figure 3 est une vue schématique, en coupe longitudinale, d'un dispositif de blocage à pendule utilisé dans le mode de réalisation de la figure 2.

La Figure 4 est une vue de face du dispositif de blocage à pendule.

La Figure 5 montre, schématiquement, le fonctionnement du pendule et un dispositif de verrouillage.

La Figure 6 est un schéma d'alimentation électrique du dispositif de verrouillage.

Les Figures 7a, 7b, 7c sont des diagrammes illustrant le fonctionnement du dispositif électrique de verrouillage.

La Figure 8 montre, schématiquement, un système de commande hydraulique du verrouillage.

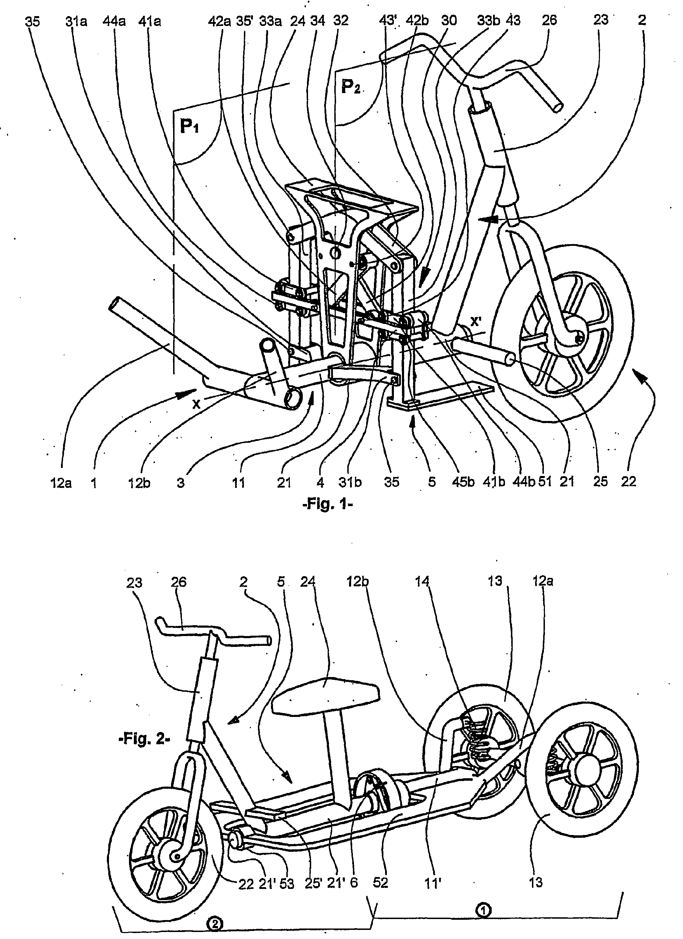

Sur la figure 1, on a représenté partiellement, en perspective, un véhicule articulé selon l'invention comprenant deux châssis, respectivement, un châssis arrière 1 et un châssis avant 2, articulés l'un sur l'autre autour d'un axe longitudinal x'x, par l'intermédiaire d'une articulation 3 comprenant un tube central 11 et un fourreau tubulaire 21 montés rotatifs l'un sur l'autre par l'intermédiaire de paliers non représentés.

Le tube central 11 est solidaire du châssis arrière 1 et porte, à son extrémité arrière, deux bras 12a, 12b qui reposent sur un essieu arrière non représenté prenant appui sur le sol par deux roues écartées tournant autour d'un axe transversal orthogonal à l'axe longitudinal x'x du tube central 11. Le fourreau tubulaire 21 est solidaire du châssis avant 2 qui repose sur une roue avant directrice 22 montée sur une colonne de direction 23 et orientée par un guidon ou volant 26. D'autre part, le châssis avant 2 porte au moins un siège pour le conducteur et l'ensemble est enfermé dans une caisse de protection non représentée sur la figure.

Le châssis arrière 1 est centré sur un plan médian longitudinal P1 passant par l'axe d'articulation x'x et orthogonal au sol alors que le châssis avant 2 est centré sur un plan médian longitudinal P2 qui peut s'incliner d'un côté ou de l'autre par rapport au premier plan médian P1 en tournant autour de l'axe d'articulation x'x. Cependant, l'inclinaison du châssis avant 2 par rapport au châssis arrière 1 peut être empêchée par un dispositif 30 de blocage de l'articulation 3 commandé par un organe pendulaire 4.

Dans le mode de réalisation de la figure 1, le dispositif de blocage est du type à parallélogramme déformable dont la constitution et le fonctionnement ont été décrits en détail dans le brevet précédent N°2688465 du même inventeur.

Un tel système comprend, d'une façon générale, un ensemble de barres articulées formant un parallélogramme déformable et comportant deux traverses écartées sensiblement parallèles au sol, respectivement une traverse inférieure 31 et une traverse supérieure 32, articulées autour d'axes, respectivement inférieurs 35 et supérieurs 35', sur deux montants 33a, 33b placés de part et d'autre du plan médian P2 du châssis avant 2 et parallèles à celui-ci.

Dans le mode de réalisation selon l'invention, représenté sur la figure 1, la traverse inférieure est constituée de deux bras 31a, 31b fixés sur l'arbre central 11 du châssis arrière 1 et s'étendant de part et d'autre de celui-ci alors que la traverse supérieure 32 est articulée autour d'un axe 34 parallèle à l'axe d'articulation x'x, sur une colonne centrale 24 fixée à sa base sur le fourreau tubulaire 21 et, par conséquent, solidaire en rotation du châssis avant 2. Par exemple, la colonne centrale 24 peut avantageusement porter au moins un siège pour le conducteur du véhicule.

On voit qu'une inclinaison du plan médian P2 du châssis avant 2 par rapport au sol se traduit par une déformation du parallélogramme 30, avec inclinaison des deux montants 33a, 33b qui sont parallèles au plan médian P2, la traverse supérieure 32 restant parallèle à la traverse inférieure 31 qui, elle même, est maintenue parallèle au sol par les deux roues 13.

D'une façon générale, le système de blocage de l'articulation comprend donc deux parties, solidaires, respectivement, des deux châssis articulés, à savoir une première partie constituée des deux traverses 31, 32, solidaires en rotation du châssis arrière 1 et une seconde partie, constituée des deux montants 33a, 33b, solidaires en rotation du châssis avant 2. L'articulation peut donc être bloquée en solidarisant ces deux parties pour empêcher la déformation du parallélogramme 30.

A cet effet, on utilise un organe pendulaire constitué d'une traverse 4 associé à deux chariots auto-bloquants 41 a, 41 b dont le fonctionnement a été décrit en détail dans le brevet précédent N°2688465 déjà cité.

La traverse 4 forme une poutre qui, dans la position d'équilibre du véhicule pour laquelle les deux plans médians coïncident, est parallèle aux deux traverses 31, 32 qui sont elles mêmes parallèles au sol et, par conséquent, sensiblement horizontales.

Comme dans le brevet précédent N°2688465, la poutre transversale 4 est suspendue au châssis avant 2 par deux bielles 42a, 42b qui sont articulées, respectivement, à une extrémité inférieure 43 sur la poutre transversale 4 et à une extrémité supérieure 43' sur la colonne centrale 24 du châssis avant 2.

Cependant, dans le mode de réalisation du brevet précédent N°2688465, les deux bielles de suspension de la poutre pendulaire convergent vers un point placé nettement au-dessus des axes supérieurs longitudinal d'articulation et constituant un centre instantané de rotation du pendule, alors que, dans le présent mode de réalisation, les deux bielles de suspension 42a, 42b sont croisées, leurs axes d'articulation, respectivement inférieur 43 et supérieur 43' étant placés de part et d'autre du plan médian P2 du second châssis 2. Il est apparu en effet, qu'un tel dispositif à bielles croisées était particulièrement sensible et rapide, en particulier, lorsque les bielles 42 sont inclinées à 45° de la verticale dans la position d'équilibre du véhicule.

Comme on l'a décrit en détail dans le brevet précédent N°2688465, la poutre suspendue 4 se comporte comme un pendule qui détecte les variations d'inclinaison de la caisse du véhicule portée par le châssis avant 2 par rapport à la direction de la verticale apparente. En cas de déviation d'un côté ou de l'autre, cette poutre pendulaire 4 commande la solidarisation des barres du parallélogramme 30 de façon à empêcher la déformation de celui-ci et, ainsi, à bloquer l'articulation 3.

A cet effet, la poutre 4 est reliée aux deux montants 33 par deux chariots 41 a, 41 b montés coulissants sur la poutre 4, chacun par l'intermédiaire de deux paires de galets, respectivement externes 44 et internes 45, et chaque montant 33a, 33b du parallélogramme déformable 30 est guidé avec jeu entre les galets du chariot 41 a, 41 b correspondant.

De la sorte, les deux chariots 41 a, 41 b peuvent se déplacer librement le long des montants 33a, 33b tant que ces derniers restent perpendiculaires à la poutre pendulaire 4.

En revanche, si un montant 33 s'incline par rapport à la poutre 4, il vient porter contre deux galets opposés, respectivement externe 44 et interne 45 qui sont entraînés par frottement si l'inclinaison se poursuit.

Cependant, les galets externes supérieurs 44a, 44b et les galets internes inférieurs 45a, 45b sont munis de roues libres qui ne tournent que dans le sens correspondant à une fermeture de l'angle compris entre la partie supérieure du montant 33 et la partie centrale de la poutre transversale 4, c'est-à-dire à un redressement du plan médian P2 tendant à ramener dans celui-ci le centre de gravité de la poutre 4.

Ainsi, lorsque le véhicule est en route, le conducteur peut s'incliner dans les courbes, en maintenant le plan médian P2 du châssis avant 2 dans le plan de la verticale apparente, c'est-à-dire la résultante de la pesanteur et de la force centrifuge. Le centre de gravité de la poutre transversale 4 qui est suspendue, à la manière d'un pendule, à la colonne centrale 24 reste alors dans le plan médian P2 du châssis avant 2. La poutre transversale 4 tourne donc avec la colonne centrale 24 en restant orthogonale au plan médian P2 et aux montants 33a, 33b du parallélogramme déformable 30 le long desquels se déplacent librement les chariots 41 a, 41 b portés par la poutre transversale 4.

De ce fait, le véhicule se comporte, en route, comme un véhicule à deux roues à stabilité dynamique.

En revanche, lorsque le véhicule s'arrête, sa vitesse diminue au-dessous du seuil à partir duquel la stabilité ne peut plus être obtenue de façon dynamique. Le châssis avant 2 a donc tendance à s'incliner par rapport au sol et son plan médian P2 s'écarte d'un côté ou de l'autre par rapport au plan médian P1 du châssis arrière 1 qui reste perpendiculaire au sol.

Les deux montants 33a, 33b du parallélogramme 30, qui sont parallèles au second plan médian P2, ont donc tendance à s'incliner par rapport à la poutre transversale 4 qui est soumise uniquement à la pesanteur et reste donc sensiblement horizontale. Par exemple, si la caisse portée par le châssis avant 2 s'incline vers la droite en regardant vers l'avant, l'angle que fait le montant 33b du parallélogramme 30 avec la partie centrale de la poutre transversale 4 a tendance à s'ouvrir en dépassant 90° et le montant 33b vient porter sur le galet supérieur externe 44b et le galet inférieur interne 45b du chariot 3, 41 b qui frottent contre les faces latérales du montant 33b mais sont empêchés de tourner par les roues libres qui n'autorisent le déplacement du chariot que vers le bas par rapport au montant correspondant. De ce fait, le chariot 41 b est bloqué par rapport au montant 33b et celui-ci est solidarisé avec la poutre transversale 4. Le parallélogramme 30 devient donc indéformable et les montants 33a, 33b parallèles au second plan médian P2 sont solidarisés en rotation avec les bras 31a, 31 b fixés sur le châssis arrière 1 et qui restent parallèles au sol. L'articulation 3 est donc bloquée, le châssis avant 2 restant légèrement incliné par rapport au sol.

Cette stabilité, à l'arrêt, du véhicule permet d'équiper celui-ci d'une caisse de protection du conducteur portée par le châssis avant 2.

Cependant, comme on vient de le voir, lorsque le véhicule se trouve à l'arrêt, le châssis avant 2 est légèrement incliné par rapport au sol, ce qui détermine le blocage de l'articulation 3. De ce fait, si le véhicule démarre dans cette position, il va tourner légèrement du côté vers lequel il est incliné avant de trouver une stabilité dynamique suffisante permettant de ramener le second plan médian P2 en coïncidence avec le premier plan médian P1 du châssis arrière.

Cet inconvénient, n'existe pas dans un véhicule à deux roues classique que le conducteur peut redresser en prenant appui sur le sol, afin de partir en ligne droite, mais ceci n'est pas possible lorsque le conducteur se trouve dans une caisse fermée.

L'invention permet de résoudre ce problème grâce à une plate-forme auxiliaire 5 qui constitue un sol virtuel sur lequel le conducteur peut prendre appui de façon à redresser le châssis avant du véhicule, au moment du démarrage, en débloquant l'articulation.

Dans l'exemple représenté sur la figure 1, cette plate-forme est constituée de deux repose-pieds 51 qui s'étendent horizontalement à partir de la base des montants 33a, 33b du parallélogramme 30.

Lorsque le conducteur prend place dans le véhicule à l'arrêt, il peut donc fermer la carrosserie et prendre appui avec un pied sur le repose-pieds 51 placé du côté vers lequel la caisse est inclinée pour redresser celle-ci en prenant appui, dans le sens opposé, par exemple, sur le guidon de direction 26. Ainsi, le plan médian P2 du châssis avant 2 revient à la verticale du centre de gravité de la traverse horizontale 4 qui est de nouveau libre, l'articulation étant débloquée, et le véhicule peut démarrer en ligne droite. Dès que la vitesse est suffisante, la stabilité dynamique peut être assurée naturellement par le conducteur, comme sur un véhicule à deux roues. Pour ne pas perturber le fonctionnement du parallélogramme déformable, il est préférable que le conducteur pose ses pieds, en route, sur d'autres repose-pieds 25 fixés sur le fourreau tubulaire 21 du châssis avant 2 et tournant avec celui-ci autour de l'axe longitudinal d'articulation x'x.

Le système de blocage de l'articulation peut fonctionner différemment et la figure 2 montre, à titre d'exemple, un autre mode de réalisation.

Comme précédemment, le véhicule comprend un châssis arrière 1 et un châssis avant 2 reliés par une articulation 3 qui peut être bloquée de façon amovible.

Le châssis arrière 1 repose, par l'intermédiaire d'une suspension 14, sur un essieu arrière 13 à deux roues écartées d'une distance suffisante pour assurer la stabilité à l'arrêt et, cependant, réduite pour ne pas augmenter l'encombrement du véhicule.

L'ensemble du châssis avant 2, portant la roue avant directrice 22 et au moins un siège 24 pour le conducteur, est entouré par une carrosserie formant une caisse fermée, qui n'est pas représentée sur la figure pour la clarté de celle-ci.

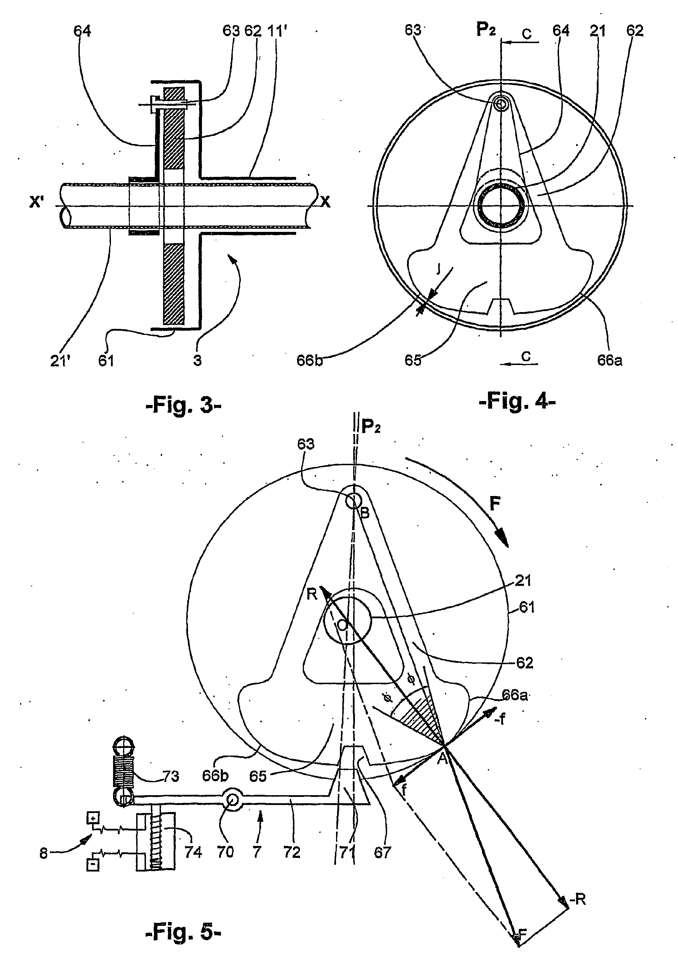

Dans ce mode de réalisation, l'articulation 3, représentée en détail sur la figure 3, comprend un arbre central 21' solidaire du châssis avant 2 et enfilé dans un fourreau tubulaire 11' solidaire du châssis arrière 1 et elle peut être bloquée par un dispositif amovible 6.

Ce dispositif de blocage 6 qui est représenté en détail sur les figures 3 et 4, comprend, essentiellement, un carter 61 fixé sur le fourreau tubulaire 11 du châssis arrière 1 et limité par une virole cylindrique à l'intérieur de laquelle est placé un pendule 62 suspendu autour d'un axe longitudinal 63 sur un bras 64 solidaire en rotation de l'arbre central 21 du châssis avant 2 et perpendiculaire à celui-ci.

L'arbre central 21' passe avec jeu dans une ouverture du pendule 62 qui peut ainsi osciller de part et d'autre du plan médian P2 du châssis avant 2 dans lequel est placé l'axe de suspension 63 du pendule 62. Celui-ci est équilibré par une masselotte inférieure 65 comprenant deux bossages 66a, 66b écartés de la face interne de la virole du carter 61 par un très faible jeu j.

De la sorte, lorsque le plan médian $P_2$ du châssis avant 2 s'incline par rapport à la direction de la verticale apparente déterminée par le pendule 62, le bossage 66 placé du côté vers lequel on s'incline vient en contact avec la virole 61, la forme des bossages 66 étant choisie pour assurer le meilleur contact possible lorsque celui-ci se produit.

La figure 5 montre le fonctionnement des forces en présence lorsque la caisse du véhicule, solidaire du châssis avant 2, tend à s'incliner, par exemple vers la droite, l'axe de suspension 63 du pendule porté par le bras 64 solidaire en rotation de l'arbre central 21' tendant à tourner autour de l'axe x'x dans le sens de la flèche F.

Le centre de gravité du pendule 62 s'écarte alors vers la droite par rapport au plan médian P2 et le bossage correspondant 66a de la masselotte 65 vient au contact de la virole 61 du carter en un point A. Il apparaît alors, entre ce point A et le centre B de l'axe d'articulation 63 du pendule 62, une force F qui est compensée par la réaction R du carter passant par le centre O de la virole 61.

Si l'on a :

$$f < \varphi.F$$

$\varphi$ étant le coefficient de frottement du bossage 66 sur la surface interne de la virole 61 du carter, il y a arc-boutement de la béquille formée par le pendule 62 et, par conséquent, blocage de la rotation, les deux parties 11' et 21' de celles-ci étant solidarisées en rotation.

Comme précédemment, le véhicule est muni d'une plate-forme auxiliaire 5 permettant de redresser la caisse, au moment du démarrage, pour débloquer l'articulation et partir en ligne droite.

Dans le mode de réalisation de la figure 2, la plate-forme auxiliaire 5 est fixée, à l'arrière, sur le fourreau tubulaire 11' et comprend deux parties formant des repose-pieds 52 qui s'étendent de part et d'autre de l'arbre central 21' du châssis avant 2 et reposent sur celui-ci, à l'avant, par un palier 53 sur lequel tourne l'arbre 21' en cas d'inclinaison du châssis avant 2.

Comme précédemment, le conducteur peut donc, après fermeture de la caisse, prendre appui sur l'un des repose-pieds 52, du côté vers lequel le châssis avant 2 est incliné, afin de redresser celui-ci pour débloquer l'articulation, le centre de gravité de la masselotte 65 revenant dans le plan médian $P_2$ du châssis avant 2. Lorsque le véhicule est en route, le conducteur prend appui sur deux repose-pieds 25' solidaires du châssis avant 2.

Cependant, comme on l'a indiqué plus haut, le blocage de l'inclinaison de la caisse n'est nécessaire que pour une vitesse nulle ou très faible. Si le conducteur est assez expérimenté pour assurer la stabilité dynamique en inclinant sa caisse suivant le plan de la verticale apparente détectée par la position du pendule, il est préférable d'éviter tout risque de blocage intempestif qui pourrait être dû à un faux mouvement du conducteur ou à une irrégularité importante de la route.

C'est pourquoi, le système de blocage est muni, de préférence, d'un dispositif de verrouillage du pendule commandé à partir d'un seuil de vitesse. Au-dessus de cette vitesse qui correspond à celle à partir de laquelle la stabilité dynamique peut être assurée, la commande de blocage de l'articulation est verrouillée, la caisse étant parfaitement libre de s'incliner et la conduite du véhicule étant identique à celle d'un véhicule à deux roues.

Un tel dispositif de verrouillage 7 représenté schématiquement sur la figure 5 comporte, par exemple, un verrou 71 monté à l'extrémité d'un bras 72 tournant autour d'un axe 70 et pouvant s'engager dans une entaille 67 ménagée dans le plan médian de la masselotte 65.

Un ressort de rappel 73 agissant sur le bras 72 maintient le verrou 71 dans une position écartée permettant le fonctionnement du pendule et le blocage de l'articulation, en cas de besoin.

Cependant, un électro-aimant 74 actionné par un dispositif de contrôle 8 comprenant un moyen de mesure de vitesse permet, à partir d'un certain seuil de vitesse, d'engager le verrou 71 dans l'entaille 67 et, par conséquent, de bloquer le pendule 62 dans sa position d'équilibre libérant l'articulation. En dessous de ce seuil de vitesse, l'électro-aimant 74 ne fonctionne pas et le verrou 71, rappelé par le ressort 73, libère le pendule 62.

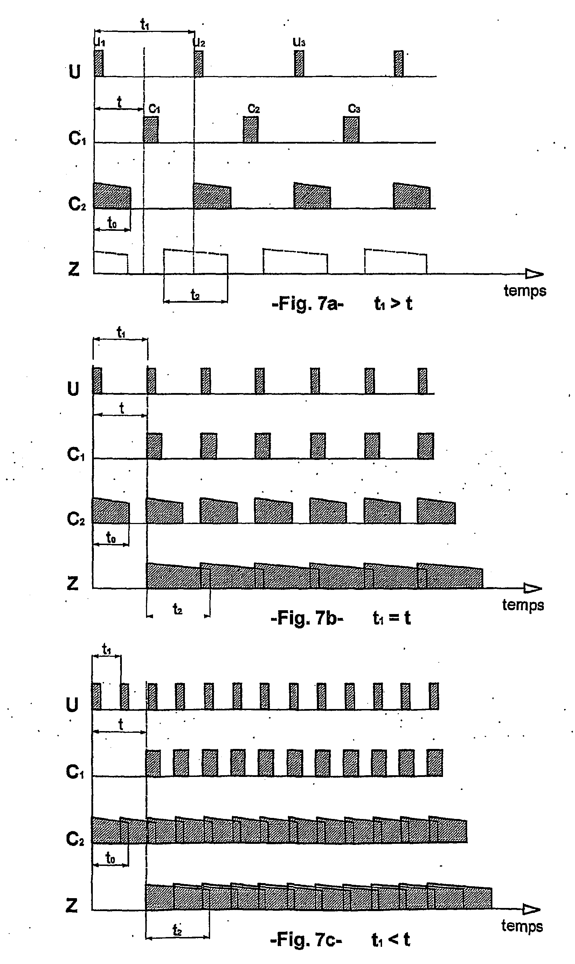

La figure 6 donne, à titre d'exemple, un schéma d'un système électrique de commande du verrou 71.

Le dispositif de mesure de vitesse comprend une roue 75 dite « roue phonique » associée, par exemple, à l'une des roues du véhicule ou tout pignon dont la vitesse de rotation est proportionnelle à la vitesse du véhicule.

Cette roue 75 porte un repère métallique en relief 76 dont le passage à proximité d'un capteur 77 fournit une impulsion dans un circuit U de réception d'un relais temporisé 8 comprenant, selon les appellations usuelles, des fonctions B ou C.

D'une façon générale, ce relais temporisé 8 comprend un circuit U qui reçoit les impulsions du capteur 77, deux circuits en série $C_1$ et $C_2$ qui constituent le circuit de commande et un circuit de charge Z qui alimente l'électro-aimant 74 ou, du moins, un relais de commande de cet électro-aimant.

Comme le montrent les figures 7a, 7b, 7c, le circuit de charge Z n'est pas alimenté tant que l'intervalle de temps $t_1$ entre deux impulsions $u_1$, $u_2$ est supérieur à une temporisation t et il est alimenté de façon continue dès que $t_1$ est inférieur à t. Une impulsion $U_1$ déclenche une courte fermeture du circuit $C_1$ mais seulement après un temps de retard t et une fermeture immédiate du circuit $C_2$ pendant un temps $t_0$ un peu inférieur à t.

Au démarrage, la vitesse est réduite et l'intervalle $t_1$ entre deux impulsions est largement supérieur à t. L'impulsion est sans effet, la continuité $C_1+C_2$ n'étant pas assurée (Figure 7a) et l'articulation 3 est bloquée. Lorsque la vitesse augmente, les impulsions se rapprochent. Dès que le temps $t_1$ entre deux impulsions successives devient égal au temps de retard t (Figure 7b), les circuits $C_1$ et $C_2$ se trouvent fermés simultanément, ce qui provoque l'alimentation du circuit de charge Z pendant une durée $t_2$ supérieure à t et par la suite une continuité de fermeture de ce circuit, tant que $t_1$ reste inférieur à t (Figure 7c).

L'électro-aimant 74 est alors alimenté et fait basculer le levier 72 tournant autour de l'axe 70 qui est solidaire, comme l'axe 63 de suspension du pendule, du plateau 64, lui-même solidaire en rotation du châssis avant 2. Le verrou 71 vient alors s'engager dans l'entaille 67 et le pendule 62 ainsi verrouillé dans sa position médiane ne peut produire aucun blocage entre les deux châssis avant 2 et arrière 1. Le véhicule se conduit alors comme un deux roues.

Inversement, si la vitesse diminue, le pendule 62 est déverrouillé lorsque $t_1$ devient supérieur à t et l'articulation se bloque pour assurer la stabilité du véhicule.

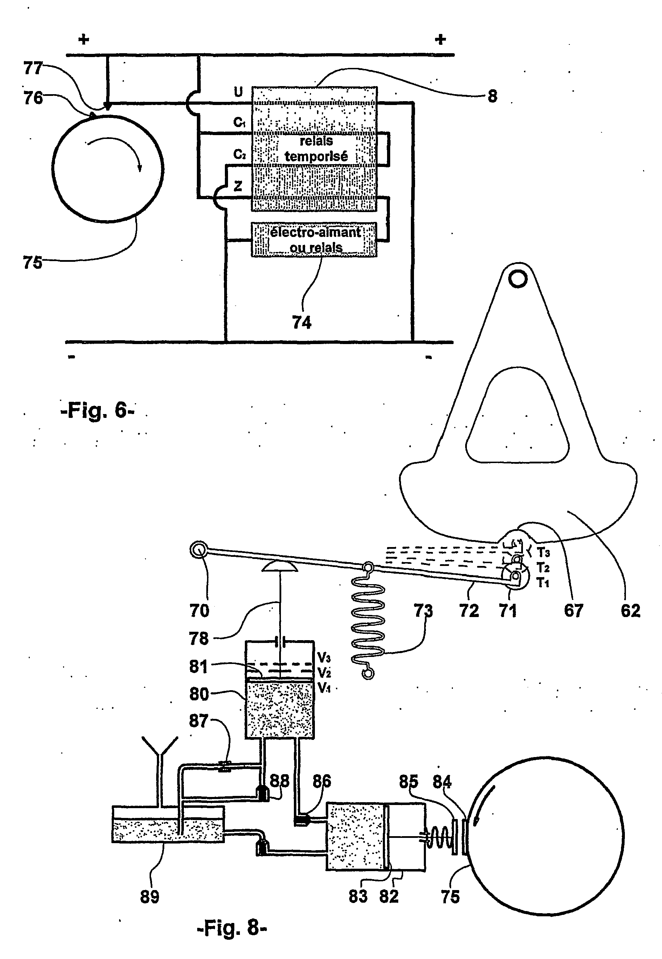

La Figure 8 montre schématiquement, à titre d'exemple, un autre système de commande du verrouillage et du déverrouillage du pendule 62.

Comme précédemment, le pendule 62 peut être bloqué dans sa position médiane par un verrou 71 qui peut être constitué, par exemple, d'un galet venant s'engager dans une encoche 67 du pendule 62. Ce verrou 71 est monté à l'extrémité d'un levier 72 pivotant autour d'un axe 70 et maintenu en position écartée par un ressort de rappel 73.

Dans le sens inverse, un poussoir 78 agissant contre l'action du ressort de rappel 73, permet de faire tourner le levier 72 pour engager le verrou 71 dans l'encoche 67.

Ce poussoir 78 est monté sur le piston 81 d'un vérin 80 ayant une chambre de pression alimentée par une pompe aspirante-refoulante 82 comprenant un corps cylindrique à l'intérieur duquel est monté coulissant un piston 83 actionné par une roue phonique 75 dont la vitesse de rotation est liée à la vitesse de déplacement du véhicule.

Le mouvement de va et vient du piston 83 est commandé, à cet effet, par un couple d'aimants permanents montés en opposition, c'est-à-dire avec les pôles de même nom face à face, l'un, 84 sur la roue 75 et l'autre, 85 à l'extrémité d'une tige reliée au piston 83. Un ressort 86 ramène le piston 83 en position de repos.

Le piston 83 reçoit ainsi une impulsion chaque fois que l'aimant 84 passe en face de l'aimant 85 et lance vers le vérin 80, à travers un clapet de non-retour 86, une certaine quantité de fluide qui déplace le piston 81 du vérin 80 d'une position $V_1$ à une position $V_2$ et, de ce fait, le galet 71 d'une position $T_1$ à une position $T_2$. Des actions analogues successives tendent à faire pénétrer le galet 71 dans l'encoche 47. Toutefois, le vérin est muni d'un orifice de fuite contrôlée 87 dont l'action d'amortissement conjuguée avec le rappel du ressort 73, place le mouvement du galet 71 sous la dépendance de la fréquence du mouvement de la pompe 82, c'est-à-dire, en définitive, sous l'influence de la vitesse du véhicule. Une soupape 88 limite la pression dans les circuits et ramène le fluide à un réservoir hors pression 89, quand la vitesse augmente.

Ce dispositif fonctionne comme suit :

- à l'arrêt, le ressort 73 refoule le fluide du vérin 80 vers le réservoir 89 à travers la fuite contrôlée 87, et le galet 71 se dégage de l'encoche 67. La masselotte 65 est libérée et le blocage fonctionne en cas d'inclinaison du véhicule ;
- lorsque le véhicule démarre, à la première coïncidence entre les positions des deux aimants 84 et 85, le piston 83 est repoussé et envoie au vérin 80 une certaine quantité de fluide qui fait passer le piston 81 d'une position $V_1$ à une position $V_2$ et le galet 71 d'une position $T_1$ à une position $T_2$. Cette position ne réalise pas encore le blocage de la masselotte. Ce blocage n'est réalisé qu'à la suite d'une ou plusieurs actions semblables en fonction de la fréquence de répétition de l'action, de la valeur de la fuite contrôlée et de la caractéristique des ressorts qui déterminent à partir de quelle fréquence d'impulsions, c'est-à-dire, en pratique, à partir de quelle vitesse de déplacement du véhicule, la fuite est compensée par l'alimentation du vérin 80, et le galet 71 reste maintenu dans l'encoche 67. Le pendule 62 est alors immobilisé et la caisse 2 peut être inclinée librement pour assurer la stabilité dynamique.

Bien entendu, un tel système de verrouillage, à commande électrique ou hydraulique, peut être adapté à un dispositif de blocage à parallélogramme déformable tel que représenté sur la figure 1, le verrou 71 s'engageant alors dans une entaille ménagée au centre de la poutre transversale 4.

D'ailleurs, l'invention ne se limite évidemment pas aux détails des modes de réalisation qui viennent d'être décrits à titre de simple exemple, d'autres variantes pouvant être imaginées sans s'écarter du cadre de protection défini par les revendications. Par exemple, il est avantageux de réaliser un véhicule à trois roues ayant un essieu arrière de stabilité et une roue avant directrice mais celle-ci pourrait aussi être remplacée par deux roues écartées et portées par les deux montants du parallélogramme déformable, celui-ci étant placé à l'avant, de la façon indiquée par exemple dans le brevet français déjà cité N°2688465 du même inventeur.

Les signes de référence insérés après les caractéristiques techniques mentionnées dans les revendications, ont pour seul but de faciliter la compréhension de ces dernières et n'en limitent aucunement la portée.

**Revendications**

1. Véhicule articulé déplaçable sur le sol suivant une direction longitudinale, comprenant deux châssis (1,2) reliés l'un à l'autre par une articulation (3) tournant autour d'un axe longitudinal (x'x) parallèle à la direction de déplacement et ayant chacun un plan médian passant par l'axe d'articulation, respectivement un premier châssis (1) prenant appui sur le sol par un premier organe roulant (13) et centré sur un premier plan médian ($P_1$) perpendiculaire au sol, et un second châssis (2) prenant appui sur le sol par un second organe roulant (22) orientable par rapport à la direction de déplacement et centré sur un second plan médian ($P_2$) inclinable par rapport au sol par rotation autour de l'axe d'articulation (x'x), et un dispositif (30, 6) de blocage amovible de l'articulation (3) comportant deux parties (31, 61) (33, 64) solidaires en rotation, respectivement, du premier et du second châssis, et un moyen de blocage amovible de l'articulation (3) comprenant un organe pendulaire (4, 62) de commande de la solidarisation en rotation desdites deux parties, ledit organe pendulaire (4, 62) étant suspendu au second châssis (2) et monté oscillant, par rapport au second plan médian ($P_2$) entre une position médiane de déblocage de l'articulation, pour laquelle le second plan médian est orienté suivant la direction de la verticale apparente déterminée par l'organe pendulaire, c'est-à-dire la résultante de la pesanteur et de la force centrifuge, et une position écartée de blocage de l'articulation (3), au moins à l'arrêt du véhicule, par inclinaison du second châssis (2) par rapport à la direction de la verticale apparente, **caractérisé par le fait qu'**il comprend un moyen (5) de commande du déblocage de l'articulation, au moins lors du démarrage du véhicule, comprenant une plate-forme auxiliaire solidaire, en rotation, du premier châssis (1) et comportant, au moins, deux repose-pieds (51) placés sensiblement au même niveau par rapport au sol, de part et d'autre de l'axe d'articulation (x'x) et constituant chacun, du côté vers lequel le second châssis (2) est incliné, un appui pour le redressement dudit second châssis (2) par un conducteur du véhicule, avec retour de l'organe pendulaire (4, 62) dans sa position médiane de déblocage de l'articulation (3).

2. Véhicule articulé selon la revendication 1, **caractérisé par le fait que** l'articulation (1) entre les deux châssis comprend un arbre central (11) solidaire en rotation de l'un des châssis (1) et un fourreau tubulaire (21) solidaire en rotation de l'autre châssis (2), ledit fourreau (21) étant enfilé sur l'arbre central (11) et monté rotatif sur celui-ci autour d'un axe longitudinal (x'x).

3. Véhicule articulé selon l'une des revendications 1 et 2, **caractérisé par le fait que** le dispositif de blocage (30) comprend un ensemble de barres articulées formant un parallélogramme déformable comportant deux traverses écartées (31, 32) sensiblement parallèles au sol, respectivement une première traverse (31) solidaire en rotation du premier châssis et une seconde traverse (32) articulée autour d'un axe longitudinal (34) placé sur le second châssis (2), dans le plan médian (P2) de celui-ci, et deux montants (33) s'étendant de part et d'autre dudit second plan médian (P2), parallèlement à celui-ci et que l'organe pendulaire de commande comprend une poutre rigide (4) suspendue de façon pendulaire au second châssis (2), s'étendant transversalement entre les deux montants (33) suivant une direction sensiblement horizontale et associée à des moyens (41) de solidarisation en rotation d'au moins l'un des montants (33) avec ladite poutre (4) par déplacement latéral de celle-ci par rapport au second plan médian ($P_2$).

4. Véhicule articulé selon la revendication 3, **caractérisé par le fait qu'**il comprend deux chariots (41) montés coulissants sur la poutre pendulaire (4), et enfilés avec jeu chacun sur l'un des montants (33) du parallélogramme (30), lesdits chariots (41) se déplaçant librement le long des montants (33) correspondants tant que la poutre pendulaire (4) reste perpendiculaire au plan médian ($P_2$) du second châssis, et comprenant chacun des moyens (44, 45) de blocage du déplacement relatif du montant (33) correspondant qui déterminent la solidarisation en rotation dudit montant (33) avec la poutre pendulaire (4) et le blocage de l'articulation (3) lorsque le plan médian ($P_2$) du second châssis (2) tend à s'écarter de la direction perpendiculaire à ladite poutre (4).

5. Véhicule articulé selon l'une des revendications 3 et 4, **caractérisé par le fait que** la plate-forme auxiliaire (5) comprend deux repose-pieds (51) fixés respectivement sur les deux montants (33) du parallélogramme déformable (30).

6. Véhicule articulé selon l'une des revendications 3 à 5, **caractérisé par le fait que** la poutre transversale (4) est suspendue de façon pendulaire à une partie (24) solidaire en rotation du second châssis (2) par deux bielles (42) articulées à leurs extrémités, autour d'axes parallèles à l'axe d'articulation (x'x) des deux châssis (1, 2) respectivement, par une extrémité supérieure sur la partie (24) solidaire du second châssis (2), et par une extrémité inférieure sur la poutre transversale (4).

7. Véhicule articulé selon la revendication 6, **caractérisé par le fait que** les deux bielles de suspension (42a, 42b) de la poutre (4) sont croisées, chaque bielle étant articulée, respectivement autour d'un axe inférieur (43) sur la poutre (4) et autour d'un axe supérieur (43') sur la partie (24) solidaire du second châssis (2), lesdits axes inférieur (43) et supérieur (43') de chaque bielle (42) étant placés, respectivement, de part et d'autre du plan médian ($P_2$) du second châssis (2).

8. Véhicule articulé selon l'une des revendications 3 à 7, dans lequel l'articulation comprend deux parties (11, 21) montées rotatives l'une sur l'autre autour d'un axe longitudinal (x'x) et solidaires en rotation, respectivement, du premier (1) et du second châssis (2), **caractérisé par le fait que** la première traverse (31) de l'ensemble articulé (30) est constituée de deux bras (31 a, 31b) fixés rigidement sur la première partie (11) de l'articulation et s'étendant de part et d'autre de l'axe longitudinal (x'x) et que la seconde traverse est constituée d'un balancier (32) articulé sur une partie centrale (24) du second châssis (2) autour d'un axe longitudinal (34) placé dans le plan médian ($P_2$) de ce dernier.

9. Véhicule articulé selon la revendication 8, **caractérisé par le fait que** la seconde traverse (32) est articulée sur une colonne centrale (24) fixée rigidement sur la seconde partie (21) de l'articulation (3) et portant au moins un siège pour le conducteur du véhicule.

**10.** Véhicule articulé selon l'une des revendications 1 et 2, **caractérisé par le fait que** le dispositif (6) de blocage de l'articulation (3) comporte une première partie solidaire en rotation du premier châssis (1) et formant une virole (61) entourant l'axe d'articulation (x'x) des deux châssis (1, 2) et une seconde partie solidaire en rotation du second châssis (2) et formant un bras (64) s'étendant transversalement à l'axe d'articulation (x'x), à l'intérieur de la virole (61), et est associé à un organe pendulaire de commande comprenant une béquille (62) suspendue à une extrémité dudit bras (64), autour d'un axe (63) parallèle à l'axe d'articulation (x'x) et placé dans le plan médian du second châssis, ladite béquille (62) oscillant à l'intérieur de la virole (61) et prenant appui sur celle-ci par une extrémité inférieure (66), en cas d'inclinaison du plan médian ($P_2$) par rapport à la direction de la béquille (62) avec arc-boutement de celle-ci sur la virole (61) et blocage de l'inclinaison du second châssis (2).

**11.** Véhicule articulé selon l'une des revendications précédentes, **caractérisé par le fait qu'**il comprend un dispositif amovible (7) de verrouillage, en route, de l'organe pendulaire (4, 62) dans sa position médiane de déblocage de l'articulation et un moyen (72, 74) de commande du dispositif de verrouillage (7) pour une vitesse du véhicule supérieure à un seuil donné.

**12.** Véhicule articulé selon la revendication 11, **caractérisé par le fait que** le dispositif de verrouillage (7) comprend un verrou (71) déplaçable entre une position écartée de libération de l'organe pendulaire (4, 62) pour la fixation de celui-ci dans sa position médiane, un moyen (76, 84) de détection de la vitesse du véhicule et un moyen (72, 74) de commande du déplacement du verrou (71) de sa position écartée à sa position engagée, actionné par le moyen de détection (76, 84) lorsque la vitesse du véhicule dépasse un seuil donné.

**13.** Véhicule articulé selon la revendication 12, **caractérisé par le fait que** le moyen (72, 74) de commande du déplacement du verrou (71) de sa position écartée à sa position engagée est commandé électriquement à partir d'impulsions émises par un détecteur de vitesse, à un intervalle de temps $t_1$ inversement proportionnel à la vitesse de déplacement du véhicule, par l'intermédiaire d'un relais temporisé (8) comprenant un circuit U de réception des impulsions, un circuit de charge Z pour l'alimentation du moyen de commande (74) pendant un temps $t_2$ à partir de l'impulsion, un premier circuit $C_1$ de fermeture du circuit de charge Z avec un temps de retard t après chaque impulsion et un second circuit $C_2$ de fermeture du circuit de charge Z à partir de l'impulsion, pendant un temps $t_0$ inférieur audit temps de retard t, le circuit de charge Z étant ainsi fermé de façon continue lorsque le temps $t_1$ entre deux impulsions $u_1$, $u_2$ est inférieur au temps de retard t du premier circuit de fermeture ($C_1$) et ouvert, de façon continue, dans le cas contraire.

**14.** Véhicule articulé selon la revendication 12, **caractérisé par le fait que** le moyen de commande du déplacement du verrou (71) est un levier (72) repoussé dans le sens d'engagement du verrou (71), contre l'action d'un ressort de rappel (73) conjugué avec une fuite contrôlée, par un poussoir (78) solidaire du piston (81) d'un premier vérin (80) alimenté par un circuit (82) recevant des impulsions déterminant chacune le passage d'une certaine quantité de fluide hydraulique dans la chambre du vérin (80) pour repousser le piston (81) et le poussoir (78) dans le sens d'engagement du verrou (71), lesdites impulsions étant produites par un dispositif (75) de détection de vitesse à une fréquence dépendant de la vitesse de déplacement du véhicule.

**15.** Véhicule articulé selon l'une des revendications précédentes, **caractérisé par le fait qu'**il comprend deux repose-pieds (25) pour le conducteur, fixés sur le second châssis 2, de part et d'autre de son plan médian P2.

## Claims

**1.** Articulated vehicle traveling on the ground into a longitudinal direction, comprising two chassis (1, 2) linked with each other by means of an articulation (3) rotating around a longitudinal axis (x'x), parallel to the traveling direction, both said chassis having their mid planes intersecting in articulation axis, respectively a first chassis (1) resting on the ground by means of a first rolling part (13) and centered on a first median plane (P1) perpendicular to the ground, and a second chassis (2) resting on the ground by means of a second rolling part (22), adjustable in relation to the traveling direction and centered on a second median plane (P2), liable to be inclined in relation to the ground by rotation around an articulation axis x'x, and a removable locking device (30, 6) of the articulation (3), comprising two parts (31, 61) (33, 64), integral in rotation, respectively of first and of second said chassis, and a removable locking device of articulation (3), comprising a pendulum type device (4) (62), controlling the integral rotation of said two parts, said pendulum type device (4) (62) being suspended to second chassis (2) and mounted oscillating in relation to second median plane (P2), between a median position unlocking the articulation, wherein the second median plane is adjusted in relation to the apparent vertical determined by pendulum type device, that is to say the result of combined gravitational and centrifugal forces, and a spaced position locking the articulation (3), at least, at standstill of vehicle, by inclination of second chassis (2) in relation to the apparent vertical, **characterised in that** it comprises a control device (5) for the unlocking of the articulation, at least at start of vehicle, comprising an auxiliary platform, integral in rotation with first chassis (1), fitted with two footboards (51) substantially located at same level above ground, on either side of articulation axis (x'x), each of said footboard providing, on the side the vehicle is slanted, a support, for the driver of vehicle, so as to raise said second chassis (2), with return of pendulum (4)(62) to its articulation unlocking median position (3).

2. Articulated vehicle according to claim 1, **characterised in that** the articulation (1) between the two chassis comprises a central shaft (11), integral in rotation with one of the chassis (1), and is fitted with a tubular sheath (21), integral in rotation with other chassis (2), said sheath (21) being assembled on central shaft (11) and mounted rotating on said shaft around longitudinal axis x'x.

3. Articulated vehicle according to one of claims 1 and 2, **characterised in that** the locking device (30) comprises a set of articulated bars constituting a deformable parallelogram, fitted with two spaced bars (31, 32), substantially parallel to the ground, respectively a first bar (31) integral in rotation with first chassis and a second bar (32), articulated around longitudinal shaft (34) located on second chassis (2), in median plane (P2) of said chassis, and fitted with two side bars (33), located on either sides of said second mid plane (P2), and parallel to said mid plane, and **in that** control pendulum device comprises a stiff beam (4) suspended as a pendulum to second chassis (2), located transverse between said two side bars (33), in a substantially horizontal direction, and bound with means (41) so as to lock in rotation at least with one of said side bars (33) with said beam (4) by traveling laterally said beam (4) in relation to second median plane (P2).

4. Articulated vehicle according to claim 3, **characterised in that** said vehicle comprises two carriages (41) mounted so as to slide on pendulum beam (4), each assembled with clearance on one of the side bar (33) of parallelogram (30), said carriages (41) moving freely along said corresponding side bars (33) as long as pendulum beam (4) remains perpendicular to median plane (P2) of second chassis, said carriages being fitted by devices (44, 45) locking the relative traveling of corresponding side bar (33), determining the integral in rotation of said side bar (33) with pendulum beam (4) as well as the locking of articulation (3) when median plane (P2) of second chassis (2) tends to move away from the perpendicular direction to said beam (4).

5. Articulated vehicle according to one of claims 3 and 4, **characterised in that** the auxiliary platform (5) comprises two footboards (51) assembled respectively on the two side bars (33) of deformable parallelogram (30).

6. Articulated vehicle according to one of claims 3 to 5, **characterised in that** the transverse beam (4) is suspended as a pendulum to a part (24) integral in rotation with second chassis (2) by means of two rods (42), articulated at their end around axis parallel to articulation axis (x'x) of the two chassis (1, 2), respectively, at an upper end to part (24) integral with second chassis (2), and at a lower end to transverse beam (4).

7. Articulated vehicle according to claim 6, **characterised in that** the two suspension rods (42a, 42b) of beam (4) are mounted crosswise, each rod being articulated, respectively around a lower axis (43) on beam (4), and around an upper axis (43') on part (24) integral with second chassis (2), said two lower (43) and upper (43') axis of each rod (42) being located respectively on either side of median plane (P2) of second chassis (2).

8. Articulated vehicle according to one claims 3 to 7, wherein articulation comprises two parts, (11, 21), mounted rotating on each other around a longitudinal axis (x'x), said parts being integral in rotation, respectively, with first (1) and with second (2) chassis, **characterised in that** the first transverse bar (31) of articulated set (30) is constituted with two brackets (31 a, 31 b), firmly assembled onto first part (11) of articulation and located on either side of longitudinal axis (x'x), and **in that** the second transverse bar is constituted by an equalizer (32) articulated on a central part (24) of second chassis (2) around a longitudinal axis (34) located in median plane (P2) of said second chassis.

9. Articulated vehicle according to claim 8, **characterised in that** the second transverse bar (32) is articulated on a central column (24), firmly assembled onto second part (21) of articulation (3), and bearing at least one seat for the driver of vehicle.

10. Articulated vehicle according to one of claims 1 and 2, **characterised in that** the locking device (6) of articulation (3) comprises a first part, integral in rotation with first chassis (1) constituted by a collar (61) surrounding articulation axis (x'x) of the two chassis (1, 2), and a second part integral in rotation with second chassis (2), constituted by a bracket (64), located in plane (P2) and transverse to articulation axis (x'x), inside the collar (61), and bound to a control pendulum type device fitted with a crutch (62) suspended to one end of said bracket (64), around an axle (63) parallel to articulation axis (x'x) and located in median plane of second chassis, said crutch (62) oscillating inside collar (61), and resting on said collar at its lower end (66), in case of inclination of median plane (P2) in relation to the direction of crutch (62), causing buttressing of said crutch on collar (61) and locking of the inclination of second chassis (2).

11. Articulated vehicle according to one of the previous claims, **characterised in that** the vehicle is fitted with a removable bolting device (7), while traveling on the road, of pendulum device (4, 62), in its median position which frees articulation, and with a control system (72, 74) operating bolting device (7) at a traveling speed above a given value.

12. Articulated vehicle according to claim 11, wherein bolting device (7) comprises a bolt (71), said bolt being removable between a spaced position releasing pendulum device (4, 62) so as to locate said pendulum device in its median position, a speed detection device (76, 84), and a control device (72, 74) removing the bolt (71) from a spaced position into a bolted position, operated by the speed detector (76, 84) when the speed of vehicle is above a given value.

13. Articulated vehicle according to claim 12, **characterised in that** the control device (72, 74) removing the bolt (71) from a spaced position into its locked position, is operated electrically by impulses sent by a speed detector, at a time interval t1 inversely proportional to the traveling speed of vehicle, by the means of a temporized relay (8) comprising a impulse reception circuit U, a supply circuit Z for the control device (74) during a t2 time from the impulse, a primary closing circuit C1 for the supply circuit Z with a given t delay time after each impulse, and a secondary closing circuit C2 for the supply circuit Z from the impulse during a given to time less than said t delay time, so as to close continuously supply circuit Z when t1 time between two impulses u1, u2 is less than t delay time of primary closing circuit C1, and to open continuously said supply circuit Z, in the opposite circumstance.

14. Articulated vehicle according to claim 12, **characterised in that** the control device removing the bolt (71) is a lever (72) pushed towards the direction so as to lock bolt (71), against the action of a return spring (73) conjugated with a controlled leakage by the means of a pusher (78) mounted on a piston (81) of a first jack (80) supplied by a circuit (82) receiving impulses, each of one determining the transfer of a certain amount of hydraulic fluid into the chamber of jack (80), so as to push piston (81) and pusher (78) towards the direction so as to lock bolt (71), said impulses being generated by the means of a speed detector (75), at a frequency determined by the traveling speed of vehicle.

15. Articulated vehicle according to one of the previous claims, **characterised in that** said vehicle comprises two footboards (25) for the driver, assembled onto second chassis (2), on either sides of its median plane (P2).

**Patentansprüche**

1. Auf dem Boden in eine Längsrichtung fortbewegbares Gelenkfahrzeug, bestehend aus zwei Rahmen (1, 2), die mittels eines sich parallel zur Fortbewegungsrichtung um eine Längsachse (x'x) drehenden Gelenks (3) miteinander verbunden sind, und von denen jeder eine durch die Drehachse führende Mittelebene aufweist, wobei jeweils der erste Rahmen (1) über ein erstes rollendes und zu einer ersten, zum Boden senkrechten Mittelebene (P₁) zentriertes Organ (13) auf dem Boden aufliegt, und ein zweiter Rahmen (2) über ein zweites rollendes, zur Fortbewegungsrichtung lenkbares und zu einer zweiten senkrechten Mittelebene (P₂) zentriertes, zum Boden hin durch Drehung um die Drehachse (x'x) neigbares Organ (22) auf dem Boden aufliegt, sowie bestehend aus einer lösbaren Feststellvorrichtung (30, 6) des Gelenks (3), die zwei bei Drehung fest miteinander verbundene Teile (31,61) (33, 64) jeweils des ersten und des zweiten Rahmens aufweist, sowie bestehend aus einem lösbaren Feststellmittel des Gelenks (3), das ein pendelndes Organ (4, 62) zur Betätigung der festen Verbindung der beiden genannten Teile bei Drehung aufweist, wobei das genannte pendelnde Betätigungsorgan (4, 62) am zweiten Rahmen (2) aufgehängt und zur zweiten Mittelebene (P₂) schwingend zwischen einer mittleren Gelenkfreigabeposition, bei der die zweite Mittelebene entsprechend der durch das pendelnde Organ bestimmten Richtung der scheinbaren Senkrechten, das heißt der Resultierenden aus Schwerkraft und Zentrifugalkraft, und einer zumindest beim Anhalten des Fahrzeugs durch Neigen des zweiten Rahmens (2) von der scheinbaren Richtung der Senkrechten abweichenden Gelenkfeststellposition (3) ausgerichtet ist, montiert ist, **dad urch gekennzeichnet**, dass es ein Betätigungsmittel (5) zur Freigabe des Gelenks zumindest beim Losfahren des Fahrzeugs aufweist, das eine drehfest mit dem ersten Rahmen (1) verbundene Hilfsplatte aufweist, die mindestens zwei Trittbleche (51) aufweist, die auf jeder Seite der Drehachse (x'x) im Wesentlichen auf gleicher Höhe zum Boden angebracht sind und von denen jede auf der Seite zu welcher der zweite Rahmen (2) neigt, eine Stützfläche zum Aufrichten des genannten zweiten Rahmens (2) durch den Fahrer des Fahrzeugs mit Rückkehr des pendelnden Organ (4, 62) in seine mittlere Gelenkfreigabeposition (3) bildet.

2. Gelenkfahrzeug nach Anspruch 1, **dadurch gekennzeichnet, dass** das Gelenk (1) zwischen den beiden Rahmen eine mit einem der Rahmen (1) drehfest verbundene Mittelwelle (11) und eine rohrförmige, drehfest mit dem anderen Rahmen (2) verbundene Hülse (21) aufweist, wobei die genannte Hülse (21) auf die Mittelwelle (11) aufgesteckt und um diese in der Längsachse (x'x) drehbar montiert ist.

3. Gelenkfahrzeug nach einem der Ansprüche 1 und 2, **dadurch gekennzeichnet, dass** die Feststellvorrichtung (30) eine Baugruppe aus Stangen mit Gelenken aufweist, die ein verformbares Parallelogramm bilden, welches zwei gespreizte, zum Boden im Wesentlichen parallele Querbügel (31, 32) besitzt, jeweils einen ersten Querbügel (31), der bei Drehung fest mit dem ersten Rahmen verbunden ist und einen zweiten Querbügel (32), der auf einer am zweiten Rahmen (2) angebrachten Längsachse (34) in dessen Mittelebene (P2) schwenkbar gelagert ist, sowie zwei Streben (33) besitzt, die sich auf jeder Seite der Mittelebene (P2) parallel zu dieser erstrecken, und **dadurch gekennzeichnet, dass** das pendelnde Betätigungsorgan einen starren Balken (4) aufweist, der pendelnd am zweiten Rahmen (2) aufgehängt ist, der sich quer zwischen den beiden Streben (33) in einer im Wesentlichen waagerechten Richtung erstreckt und der mit Mitteln (41) zur festen Verbindung bei Drehung von zumindest einer der Streben (33) und dem genannten Balken (4) durch seitliches Verschieben des Letzteren zur zweiten Mittelebene (P$_2$) verbunden ist.

4. Gelenkfahrzeug nach Anspruch 3, **dadurch gekennzeichnet, dass** es zwei auf dem Pendelbalken (4) gleitend montierte Schlitten (41) aufweist, von denen jeder mit Spiel auf die Streben (33) des Parallelogramms (30) aufgeschoben ist, wobei sich die genannten Schlitten (41) entlang der entsprechenden Streben (33) frei bewegen, solange der Pendelbalken (4) senkrecht zur Mittelebene (P$_2$) des zweiten Rahmens steht und jeder von ihnen Mittel (44, 45) zur Feststellung der jeweiligen Bewegung an der entsprechenden Strebe (33) aufweist, welche bei Drehung die feste Verbindung der genannten Strebe (33) mit dem Pendelbalken (4) und die Feststellung des Gelenks (3) bestimmen, wenn die Mittelebene (P$_2$) des zweiten Rahmens (2) dazu neigt, von der senkrechten Richtung des genannten Balkens (4) abzuweichen.

5. Gelenkfahrzeug nach einem der Ansprüche 3 und 4, **dadurch gekennzeichnet, dass** die Hilfsplatte (5) zwei Trittbleche (51) aufweist, die jeweils an den beiden Streben (33) des verformbaren Parallelogramms (30) befestigt sind.

6. Gelenkfahrzeug nach einem der Ansprüche 3 bis 5, **dadurch gekennzeichnet, dass** der Querbalken (4) pendelnd an einem bei Drehung fest mit dem zweiten Rahmen (2) verbundenen Teil (24) mittels zwei Schwingen (42) aufgehängt ist, die an ihren Enden, um die zur Drehachse (x'x) der beiden Rahmen (1, 2) parallelen Achsen angelenkt werden, das heißt jeweils an einem oberen Ende des fest mit dem Rahmen (2) verbundenen Teils (24) und einem unteren Ende des Querbalkens (4).

7. Gelenkfahrzeug nach Anspruch 6, **dadurch gekennzeichnet, dass** sich die beiden Schwingen (42a, 42b) der Aufhängung des Balkens (4) kreuzen und jede Schwinge jeweils um eine untere Achse (43) am Balken (4) und eine obere Achse (43') an dem bei Drehung fest mit dem zweiten Rahmen (2) verbundenen Teil (24) angelenkt wird, wobei die genannte untere Achse (43) und die obere Achse (43') jeder Schwinge (32) auf jeder Seite der Mittelebene (P2) des zweiten Rahmens (2) angebracht ist.

8. Gelenkfahrzeug nach einem der Ansprüche 3 bis 7, bei dem das Gelenk aus zwei um eine Längsachse (x'x) ineinander montierten, drehbaren Teilen (11, 21) besteht, die bei Drehung jeweils fest mit dem ersten Rahmen (1) oder dem zweiten Rahmen (2) verbunden sind, **dadurch gekennzeichnet, dass** der erste Querbügel (31) der angelenkten Baugruppe (30) aus zwei starr am ersten Teil (11) des Gelenks befestigten Armen (31 a und 31 b) gebildet wird und sich auf jeder Seite der Längsachse (x'x) erstreckt und dass der zweite Querbügel aus einer zweiarmigen Schwinge (32) gebildet wird, die am Mittelteil (24) des zweiten Rahmens (2) um eine in der Mittelebene (P$_2$) des Letzteren angeordnete Längsachse (34) drehbar gelagert ist.

9. Gelenkfahrzeug nach Anspruch 8, **dadurch gekennzeichnet, dass** der zweite Querbügel (32) drehbar an einer starr auf einem zweiten Teil (21) des Gelenks (3) befestigten, mindestens einen Sitz für den Fahrer des Fahrzeugs tragenden Mittelsäule (24) gelagert ist.

**10.** Gelenkfahrzeug nach einem der Ansprüche 1 und 2, **dadurch gekennzeichnet, dass** die Feststellvorrichtung (6) des Gelenks (3) einen ersten, mit dem ersten Rahmen (1) bei Drehung fest verbundenen, die Drehachse (x'x) der beiden Rahmen (1, 2) umgebenden Ring (61) bildenden Teil sowie einen zweiten, mit dem zweiten Rahmen (2) bei Drehung fest verbundenen, sich im Inneren des Rings (61) quer zur Drehachse (x'x) erstreckenden Arm (64) bildenden Teil aufweist, und mit einem pendelnden Betätigungsorgan verbunden ist, das eine am Ende des genannten Arms (64) parallel zur Drehachse (x'x) um eine Achse (63) gelagerte, und in der Mittelebene des zweiten Rahmens aufgehängte Krücke (62) aufweist, wobei die genannte Krücke (62) im Inneren des Rings (61) hin- und herschwingt und bei Schräglage der Mittelebene ($P_2$) zur Richtung der Krücke (62) mit einem unteren Ende (66) unter Abstützung Letzterer auf diesem und Feststellung der Neigung des zweiten Rahmens (2) auf dem Ring (61) aufsetzt.

**11.** Gelenkfahrzeug nach einem der vorausgehenden Ansprüche, **dadurch gekennzeichnet, dass** es eine bei Fahrt in der mittleren Gelenkfreigabeposition des pendelnden Organs (4, 62) lösbare Verriegelungsvorrichtung (7) und ein Mittel (72, 74) zur Betätigung der Verriegelungsvorrichtung (7) bei einer Fahrzeuggeschwindigkeit über einer bestimmten Schwelle aufweist.

**12.** Gelenkfahrzeug nach Anspruch 11, **dadurch gekennzeichnet, dass** die Verriegelungsvorrichtung (7) einen Verriegelungsbolzen (71) aufweist, der zwischen einer abstehenden Freigabeposition des pendelnden Organs (4, 62) zu seiner Feststellung in Mittelposition, einem Mittel (76, 84) zur Erkennung der Fahrzeuggeschwindigkeit und einem Mittel (72, 74) zur Betätigung der Bewegung des Bolzens (71) aus seiner abstehenden Position in seine eingreifende Position bewegt werden kann, welche durch ein Erkennungsmittel (76, 84) betätigt wird, wenn die Fahrzeuggeschwindigkeit eine bestimmte Schwelle überschreitet.

**13.** Gelenkfahrzeug nach Anspruch 12, **dadurch gekennzeichnet, dass** das Mittel (72, 74) zur Betätigung der Bewegung des Verriegelungsbolzens (71) aus seiner abstehenden Position in seine eingreifende Position durch Takte, die von einem Geschwindigkeitsaufnehmer in einem zur Fortbewegungsgeschwindigkeit des Fahrzeugs umgekehrt proportionalen Zeitabstand $t_1$ gesendet werden, über ein Zeitrelais (8) elektrisch betätigt wird, das einen Schaltkreis U zum Empfang der Takte, einen Lastkreis Z zur Spannungsversorgung des Betätigungsmittels (74) während einer Zeit $t_2$ ab dem Takt, einen ersten Schaltkreis $C_1$ zum Schließen des Lastkreises Z mit einer Verzögerungszeit t nach jedem Takt und einen zweiten Schaltkreis $C_2$ zum Schließen des Lastkreises Z ab dem Takt während einer Zeit to aufweist, die unter der genannten Verzögerungszeit t liegt, wobei somit der Lastkreis Z ständig geschlossen ist, wenn die Zeit $t_1$ zwischen zwei Takten $u_1$ und $u_2$ unter der Verzögerungszeit t des ersten Schließkreises ($C_1$) liegt, und im umgekehrten Fall ständig geöffnet ist.

**14.** Gelenkfahrzeug nach Anspruch 12, **dadurch gekennzeichnet, dass** das Mittel zur Betätigung der Bewegung des Verriegelungsbolzens (71) ein Hebel (72) ist, der in Richtung des Eingriffs des Verriegelungsbolzens (71) gegen die Wirkung einer Rückholfeder (73) in Verbindung mit einem gesteuerten Ausströmen durch einen Schieber (78) zurückgedrückt wird, der fest mit dem Kolben (81) eines ersten, durch einen Kreis (82) versorgten Zylinders (80) verbunden ist, der Takte empfängt, von denen jeder das Einströmen einer bestimmten Menge Hydraulikflüssigkeit in die Zylinderkammer (80) zum Zurückdrücken des Kolbens (81) und des Schiebers (78) in die Richtung des Eingriffs des Verriegelungsbolzens (71) bestimmt, wobei die genannten Takte von einer Vorrichtung (75) zur Erkennung der Geschwindigkeit mit einer von der Fortbewegungsgeschwindigkeit des Fahrzeugs abhängigen Frequenz erzeugt werden.

**15.** Gelenkfahrzeug nach einem der vorausgehenden Ansprüche, **dadurch gekennzeichnet, dass** es zwei Trittbleche (25) für den Fahrer aufweist, die auf dem zweiten Rahmen (2) jeder Seite seiner Mittelebene P2 befestigt sind.

EP 1 399 357 B1

-Fig. 1-

-Fig. 2-

15

-Fig. 3-

-Fig. 4-

-Fig. 5-

-Fig. 7a-    $t_1 > t$

-Fig. 7b-    $t_1 = t$

-Fig. 7c-    $t_1 < t$

77

76

U

C₁

C₂

Z

8

relais
temporisé

électro-aimant
ou relais

75

74

-Fig. 6-

T₃
T₂
T₁

70 78 81 80 87

V₃
V₂
V₁

73 72 71 67 62

88 86 85 84

89 83 82 75

-Fig. 8-